(19) Europäisches Patentamt
European Patent Office
Office européen des brevets

(11) Veröffentlichungsnummer: **0 044 052**
**B1**

(12) **EUROPÄISCHE PATENTSCHRIFT**

(45) Veröffentlichungstag der Patentschrift: **03.10.84**

(21) Anmeldenummer: **81105384.2**

(22) Anmeldetag: **10.07.81**

(51) Int. Cl.³: **C 08 J 3/12,** C 08 J 9/26, B 01 J 20/26, C 09 K 3/32, C 09 D 7/12, A 61 L 9/04, A 01 N 25/10 // C08L23/12

(54) **Poröses, pulverförmiges Polypropylen.**

(30) Priorität: **15.07.80 DE 3026762**

(43) Veröffentlichungstag der Anmeldung: **20.01.82 Patentblatt 82/3**

(45) Bekanntmachung des Hinweises auf die Patenterteilung: **03.10.84 Patentblatt 84/40**

(84) Benannte Vertragsstaaten: **AT BE CH FR GB IT LI LU NL SE**

(56) Entgegenhaltungen:
**DE - A - 1 694 038**
**DE - A - 1 908 516**
**DE - A - 2 737 745**

(73) Patentinhaber: **Akzo GmbH, Postfach 10 01 49 Kasinostrasse 19-23, D-5600 Wuppertal-1 (DE)**

(72) Erfinder: **Fickel, Walter, Dr. Robert-Koch-Strasse 3, D-8765 Erlenbach (DE)**
Erfinder: **Ries, Gerhard, Am Thiefental 32, D-8753 Obernburg (DE)**

EP 0 044 052 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft poröses, pulverförmiges Polypropylen, das eine grosse innere, von aussen zugängliche Oberfläche besitzt, Verfahren zu dessen Herstellung sowie seine Verwendung desselben.

Es ist bekannt, Polypropylen mit poröser Struktur, insbesondere in Form von kompakten Körpern wie Platten, aber auch in Form von Folien, Fäden und Hohlfäden herzustellen. So wird z.B. in der US-PS 3 607 793 ein Verfahren beschrieben, nach dem man, ausgehend von kleinen Polypropylenpartikelchen mit einer Grösse von etwa 0,02 bis 0,5 µm und Lösen derselben in Kohlenwasserstoffen, zu porösen Filmen gelangen kann, wenn man die Abkühlung mit einer Geschwindigkeit von weniger als 100°C pro Minute durchführt.

Dieses Verfahren ist jedoch für die Herstellung von pulverförmigem, porösem Polypropylen nicht brauchbar. Versucht man nämlich poröse Strukturen, wie sie gemäss der Lehre der US-PS 3 607 793 erhalten werden, durch Zerkleinern in Pulverform zu überführen, so treten erhebliche Schwierigkeiten auf. So wird das Material, wenn man es z.B. mahlt, schmierig bzw. beginnt zu schmelzen. Auch durch intensives Kühlen lässt sich ein einwandfreies poröses pulverartiges Produkt nicht erhalten, da während des Mahlvorgangs die Strukturen zerquetscht und zerrissen werden. Auch lässt sich auf diese Weise kein Pulver mit einer günstigen Korngrössenverteilung bekommen.

Auch kompakte Polypropylenmassen mit poröser Struktur, wie sie in der DE-OS 2 737 745 beschrieben werden, lassen sich auf diese Weise nur unter Schwierigkeiten pulverisieren und ergeben ein Pulver, das in vieler Hinsicht unbefriedigende Eigenschaften aufweist.

Selbst das Zerkleinern unter flüssigem Stickstoff führt nicht zu Pulvern mit voll zufriedenstellenden Eigenschaften. Einmal ist das Arbeiten mit flüssigem Stickstoff teuer, da energieintensiv, auch ist die starke Gasentwicklung aufgrund von verdampfendem Stickstoff lästig. Schliesslich lässt es sich auch durch eine so intensive Kühlung, wie es durch Einsatz von flüssigem Stickstoff möglich ist, nicht vermeiden, dass an den Schnitt- oder Bruchflächen der Partikelchen sich fasrige Enden befinden, welche die Eigenschaften des Pulvers, z.B. die Rieselfähigkeit nachteilig beeinflussen.

In der DE-OS 1 694 038 wird ein Verfahren beschrieben, nach dem man aus den verschiedensten Polymeren unter der Verwendung einer ganzen Reihe von Lösungsmitteln pulverförmige Produkte herstellen kann. Neben Polyolefinen wie Polyäthylen, Polypropylen usw. werden Polyester, Polyamide und sonstige Polymere als makromolekulare Substanzen genannt. Als Lösungsmittel sollen übliche gesättigte oder auch ungesättigte Kohlenwasserstoffe, halogenierte Kohlenwasserstoffe und im Einzelfall auch Cyclohexanon eingesetzt werden. Aldehyde, Ketone, Alkohole und Säuren sollen nach dem dort beschriebenen Verfahren weniger geeignet sein.

Hinweise, ein spezielles Verfahren zur Herstellung von porösem, pulverförmigem Polypropylen unter der Verwendung von Pentaerythritestern als Lösungsmittel, sind dieser Offenlegungsschrift nicht zu entnehmen. Auch lassen sich mit dem in der DE-OS 1 694 038 beschriebenen Verfahren nicht die vielen Vorteile erzielen, zu welchen die vorliegende Erfindung führt, wie wirtschaftliche und einfache Herstellung des Pulvers, problemloses Pulverisieren des angefallenen festen Produkts, besonders vorteilhafte poröse Strukturen, welche das Polypropylenpulver für viele Einsatzzwecke besonders geeignet machen.

Poröse, pulverförmige Substanzen können auf den verschiedensten Gebieten, z.B. bei der Adsorption, als Zusatz- oder Füllmittel oder dergleichen verwendet werden. Es besteht deshalb ein Bedürfnis nach solchen porösen Substanzen, insbesondere solchen mit verbesserten Eigenschaften sowie nach entsprechenden Herstellungsverfahren.

Aufgabe der Erfindung ist es deshalb, poröses, pulverförmiges Polypropylen zur Verfügung zu stellen, das eine günstige Kornform und Korngrössenverteilung aufweist und eine grosse innere, von aussen zugängliche Oberfläche und eine gleichmässige Porenstruktur bestitzt und gut rieselfähig ist. Aufgabe der Erfindung ist ferner ein verbessertes Verfahren zum Herstellen derartiger Polypropylenpulver, das insbesondere eine wirtschaftliche und einfache Herstellungsweise erlaubt. Aufgabe der Erfindung ist es ferner, besonders vorteilhafte Verwendungsmöglichkeiten derartiger Polypropylenpulver aufzuzeigen.

Diese Aufgabe wird gelöst durch ein Verfahren zum Herstellen von porösem, pulverförmigem Polypropylen, das dadurch gekennzeichnet ist, dass man heisse Lösungen von Polypropylen in Pentaerythritester langsam bis auf etwa Raumtemperatur abkühlt, die erstarrte Masse gegebenenfalls mechanisch zerkleinert und mit einem Lösungsmittel, in dem Pentaerythritester löslich ist, extrahiert und das Lösungsmittel anschliessend ggf. weitgehend entfernt. Vorzugsweise werden dabei Lösungen von Polypropylen in Estern des Pentaerythrits und Fettsäuren insbesondere synthetischen Fettsäuren mit 8 bis 10 Kohlenstoffatomen verwendet. Zum Extrahieren des Pentaerythritesters ist besonders Äthanol geeignet. Günstig ist es, wenn man mit Lösungen arbeitet, die ein Gewichtsverhältnis Polypropylen:Pentaerythrit von etwa 30:70 bis 10:90, vorzugsweise 25:75 bis 15:85 aufweisen. Zweckmässig werden die Lösungen im Bereich von etwa 260–120°C im Schnitt mit einer Geschwindigkeit von etwa 1 bis 20°C, vorzugsweise mit einer Geschwindigkeit von 2 bis 10°C pro Minute abgekühlt. Dem Polypropylen kann bis zu 10% Polyäthylen beigemischt sein. Gegenstand der Erfindung ist ferner, poröses, pulverförmiges Polypropylen, gekennzeichnet durch Körnchen mit einem Durchmesser von 50–700 µm einer scheinbaren Dichte von 0,1–0,3 g/cm³ und einem von aussen zugänglichen Hohlraumvolumen von 70

bis 85%. Die scheinbare Dichte beträgt vorzugsweise 0,13–0,15, die Körnchengrösse ist vorzugsweise 50 bis 150 µm.

Gegenstand der Erfindung ist ferner die Verwendung von porösem, pulverförmigen Polypropylen zum Abtrennen von hydrophoben Substanzen, insbesondere Öl aus wässrigen Systemen sowie zum Aufsaugen von Flüssigkeiten, wobei die Eigenschaft als Ölbindemittel besonders hervorzuheben ist. Pulverförmiges Polypropylen gemäss der Erfindung kann sehr vorteilhaft auch als Zusatz zu Anstrichmitteln, insbesondere als Zusatz zu Schutzanstrichmitteln verwendet werden.

Es ist weiter sehr geeignet als Träger von Substanzen zur Langzeitabgabe.

Zur Herstellung des porösen, pulverförmigen Polypropylens gemäss der Erfindung geht man im allgemeinen auf die Weise vor, dass man auf an sich übliche Weise eine Lösung aus Polypropylen und Pentaerythritester durch Erhitzen auf Temperaturen von etwa 250–260°C herstellt.

Als Polypropylen kann dabei Polypropylen verwendet werden, das auf übliche Herstellungsweisen gewonnen wird. Besonders geeignet ist Polypropylen mit einem mittleren, höheren aber auch niedrigeren Molekulargewicht. Es können handelsübliche Sorten eingesetzt werden z.B. Hostalen 1070.

Das Poylpropylen kann allein oder in Mischung mit anderen Polymeren und sonstigen Zustäzen verwendet werden. Dabei kann das Polypropylen mit einer kleineren oder grösseren Menge z.B. 50% eines oder mehrerer anderer Polymere verschnitten werden. Es können auch Polypropylensorten unterschiedlichen Molekulargewichts miteinander vermengt werden; selbstverständlich ist der Einsatz von Copolymeren möglich.

Besonders vorteilhaft ist es, wenn man dem Polypropylen bis etwa 10% Polyäthylen beimengt. Bei dem Polyäthylen kann es sich um Nieder- oder Hochdruckpolyäthylen handeln.

Durch Variieren des Molekulargewichts des verwendeten Polypropylens ist es möglich, die Korngrösse des Pulvers zu beeinflussen. So kann man durch Erhöhen des Schmelzindexes des Polypropylens die Korngrösse insbesondere der sogenannten Primärkörner erniedrigen.

Es hat den Anschein, dass durch die Erfindung die Korngrösse in sehr günstiger Weise sozusagen vorprogrammiert wird und dass die einzelnen Körner weniger durch Zerteilen d.h. durch Zerstören von grösseren Einheiten sondern durch einen Trennvorgang erhalten werden, dem selbstverständlich auch mechanische Teilungsvorgänge wie Schneiden oder Brechen überlagert sein können.

Eine sehr günstige Kornverteilung ist gemäss der Erfindung durch das am Anmeldetag unter der Bezeichnung Vestolen PV 3377 bei den Chemischen Werken Hüls, Marl erhältliche Produkt zu erreichen. (VESTOLEN, eingetragenes Warenzeichen.)

Zum Herstellen der Lösungen können als Lösungsmittel übliche käuflich erhältliche Pentaerythritester verwendet werden. Ein sehr geeignetes Produkt ist das im Handel erhältliche, am Anmeldedatum unter der Produkt-Bezeichnung BK 2104 von der Firma Henkel & Cie., Düsseldorf vertriebene Produkt.

Besonders geeignet sind Pentaerythritester, die aus Pentaerythrit und Monocarbonsäuren, d.h. Fettsäuren, insbesondere synthetischen Fettsäuren mit 8 bis 10 Kohlenstoffatomen erhalten worden sind.

Pentaerythrit ist ein bekannter, leicht zugänglicher vierwertiger Alkohol mit der Formel

$C(CH_2OH)_4$.

Die durch Erhitzen von Polypropylen und Pentaerythritester erhaltene Lösung wird sodann in ein Gefäss oder einen sonstigen Behälter gegeben und mit entsprechender Geschwinigkeit abgekühlt. Man kann die Lösung auch mit entsprechender Dicke auf ein Blech oder ein Band giessen, wobei man durch Wahl der Dicke der Schicht und gegebenenfalls Kühlung des Blechs bzw. Bandes für entpsrechende Abkühlung Sorge trägt. Auch Trommeln wie Kühltrommeln oder Walzen können als Auflage für die zu vergiessende Lösung dienen.

Nach dem Abkühlen erhält man eine feste Masse von bröckeliger Konsistenz, die sich sehr gut z.B. durch Abstreifen von der Unterlage entfernen lässt und die sich leicht durch Zerschlagen oder Zerkrümeln zerkleinern lässt.

Diese Masse wird sodann der Extraktion mit einem Lösungsmittel zugeführt, welches Pentaerythritester löst, Polypropylen jedoch nicht. Dazu zählen u.a. Alkohole wie Methanol, Äthanol, Isopropanol und Butanol, Aceton, Essigsäureäthylester, Benzol, Toluol, Xylol, Methylenchlorid, Chloroform und Tetrachlorkohlenstoff.

Besonders geeignet dafür ist Äthanol.

Es empfiehlt sich, während des Extraktionsvorgangs zu rühren, wodurch die Extraktion gefördert wird und gleichzeitig eine Zerkleinerung in feinere Körner stattfindet. Die Extraktion wird solange fortgesetzt, bis der Pentaerythritester in ausreichendem Masse abgetrennt worden ist.

Nach der Extraktion kann das Pulver getrocknet werden, z.B. durch Erwärmen in einem Ofen durch Behandlung mit trockener Luft. Vorzugsweise findet die Entfernung des Extraktionsmittels im Vakuum statt, dadurch wird ein zu starkes Erhitzen der Körner vermieden. Vielfach ist es zweckmässig, das Pulver nicht über 50°C zu erhitzen. Vielfach reicht es aus, wenn das Extraktionsmittel nur bis auf einen Rest entfernt wird und z.B. alkoholfeucht für bestimmte Einsatzgebiete zur Verfügung gestellt wird.

Es war besonders überraschend, dass man auf diese Weise pulverförmiges Polypropylen erhält, das eine sehr günstige Korngrössenverteilung besitzt. Es ist möglich, gemäss der Erfindung Pulver zu erhalten, dessen Korngrössen in der Hauptsache im Bereich von 50 bis 700 µm liegen, wobei der Bereich von 50 bis 150 µm bevorzugt wird. Die Verteilung kann sehr eng gehalten werden.

Durch Variieren der Abkühlungsbedingungen, der Auswahl des Molekulargewichts, des Polypropylens und geeignete Zusätze ist es möglich, die Korngrösse zu beeinflussen.

Das Pulver lässt sich gut sieben und ggf. in verschiedene Korngrössenfraktionen aufteilen. Das erhaltene Pulver zeichnet sich durch eine grosse innere Oberfläche aus, die von aussen gut zugänglich ist, was sich insbesondere durch ein hervorragendes Absorptionsverhalten gegenüber den verschiedensten Substanzen bemerkbar macht und andererseits es ermöglicht, das Pulver mit verschiedensten Substanzen zu tränken bzw. zu beladen, die dann im Laufe der Zeit wieder nach aussen abgegeben werden können.

Das Porenvolumen bezogen auf das Gewicht des Pulvers ist sehr hoch und beträgt mehrere $cm^3$ pro Gramm, z.B. 3,2 $cm^3/g$.

Besonders überraschend war, dass sich die erfindungsgemässen porösen Pulver in hervorragender Weise zum Abtrennen von hydrophoben Substanzen aus wässrigen Systemen eignen, wobei insbesondere auf ihre Fähigkeit hingewiesen werden muss, Öl aus Wasser abzutrennen. So kann man ölverschmutztes Wasser, das vorgereinigt wurde aber noch einen geringen Grad von Verschmutzung aufweist, der sich durch einen typischen, regenbogenfarbigen Farbschleier auf dem Wasser bemerkbar macht, durch Behandeln mit porösem Polypropylenpulver z.B. durch Unterrühren von Pulver gemäss der Erfindung reinigen bzw. nachreinigen, so dass der Farbschleier anschliesend verschwunden ist.

Auch kann man mit den erfindungsgemässen Pulvern wesentlich mehr Flüssigkeit, insbesondere Öl binden als das bei den bekannten Produkten der Fall ist. So ist es möglich, mit einem Liter porösem, pulverförmigem Polypropylen gemäss der Anmeldung 0,82, ja sogar 1,19 Liter Heizöl zu binden. Das Aufsaugvermögen des Pulvers ist hervorragend. Man braucht das Pulver nur auf Öllachen zu verstreuen und erreicht in Kürze, dass das Öl von dem Pulver aufgenommen wird. Die porösen, pulverförmigen Massen gemäss der Erfindung können mit sehr niedrigem scheinbarem spezifischem Gewicht hergestellt werden. Ihr spezifisches Saugvermögen ist sehr hoch.

Die porösen, pulverförmigen Massen gemäss der Anmeldung eignen sich ausserdem in hervorragender Weise als Zusatz zu den verschiedensten Anstrichmitteln. Da gemäss der Erfindung eine sehr feine Körnung erreichbar ist, lassen sich die Pulver sehr gut in den Anstrichmitteln verteilen, so dass man sehr homogene Anstrichmittel erhalten kann, die sich problemlos verarbeiten lassen.

Aufgrund ihrer hohen, inneren Oberfläche und des hohen, inneren Volumens, das von aussen gut zugänglich ist, lassen sich die Pulver gemäss der Erfindung mit den verschiedensten Substanzen füllen, die dann verteilt über längere Zeiträume aus dem Pulver wieder nach aussen entweichen können. Durch entsprechende Einstellung der Porenstruktur und des inneren Volumens ist es möglich, die Langzeitabgabe, und zwar hinsichtlich auch der Zeit zu beeinflussen. Man kann den porösen Substanzen, die als Zusatz für Anstrichmittel verwendet werden, wirksame Substanzen einverleiben, die dann in dem Anstrich auf lange Zeit eine entsprechende Wirkung entfalten. Hierfür eignen sich insbesondere Fungicide, Algenwuchshemmittel, pilztötende Substanzen und Korrosionsmittel. Diese Art von Schutzanstrichen sind insbesondere für das Streichen von Schiffsrümpfen geeignet, die bekanntlich einer sehr starken Korrosion und Algenbefall u.dgl. ausgesetzt sind.

Besonders geeignet ist das Pulver gemäss der Anmeldung als Träger für die Langzeitabgabe auch auf dem Gebiet der Land- und Forstwirtschaft. Es kann mit den verschiedensten Substanzen beladen werden und dann auf Boden oder Pflanzen verteilt werden. So kann man Schädlingsbekämpfungsmittel, Spurenelemente einbringen und dosiert verteilen, es ist auch möglich Duftstoffe, wie Sexuallockstoffe, sogenannte Pheromone, in dem Pulver zu verteilen und durch Anlocken oder Verwirren der Insektenmännchen eine Befruchtung der Weibchen zu verhindern.

Das Exstraktionsmittel, insbesondere bei Verwendung von Äthanol, kann bequem zurückgewonnen werden.

Das erfindungsgemässe Verfahren ist toxisch unbedenklich, so dass keinerlei Beeinträchtigung des Bedienungspersonals während der Herstellung zu befürchten ist. Der extrahierte Pentaerythritester kann ohne weiteres wieder verwendet werden, so dass auch keinerlei Belastung der Umwelt zu erwarten ist.

Das Verfahren arbeitet äusserst wirtschaftlich und stellt ein pulverförmiges Produkt aus einem billigen Polymeren zur Verfügung.

Die Erfindung wird durch folgende Beispiele näher erläutert:

Beispiel 1

In 2000 g eines käuflichen Pentaerythritesters (BK 2104 der Firma Henkel und Cie., Düsseldorf) werden unter Rühren bei 250–260°C 500 g eines Gemisches aus 90% Polypropylen und 10% Polyäthylen (Handelsprodukt der Firma Chemische Werke Hüls AG, Marl, Bezeichnung Vestolen PV 3377) gelöst. Sobald eine homogene Lösung eingetreten ist (etwa nach 2–3 Stunden), wird die Flüssigkeit in einer ca. 5 mm hohen Schicht auf ein VA-Blech ausgegossen. (VESTOLEN, eingetragenes Warenzeichen.)

Nach dem Erkalten wird die erstarrte, krümelige Masse 10×30 Min. mit je 5 l Äthanol zur Entfernung des Pentaerythritesters gewaschen. Das über ein Filter abgetrennte feinporige Vestolenpulver wird in einer ca. 3 cm hohen Schicht auf Horden im Vakuum bei 40–50°C getrocknet.

Beispiel 2

Zu 5600 g des gleichen Pentaerythritesters wie in Beispiel 1 werden unter Rühren 240 g eines käuflichen Polypropylens (Hostalen 1070-Granulat – Handelsprodukt der Hoechst AG) eingebracht und in ca. 3 Stunden bei 260°C gelöst. Ist

eine homogene Lösung erreicht, wird diese auf eine kalte Metallplatte ausgegossen. Nach Erstarrung der Lösung zu einer bröckeligen Masse wird diese 10×30 Min. mit je 12 l Äthanol gewaschen, um den Pentaerythritester zu entfernen.

Das über ein Vakuumfilter abgesaugte Hostalenpulver wird wie unter 1 beschrieben im Vakuum getrocknet. (HOSTALEN, eingetragenes Warenzeichen.)

**Patentansprüche**

1. Verfahren zum Herstellen von porösem pulverförmigem Polypropylen, dadurch gekennzeichnet, dass man heisse Lösungen von Polypropylen in Pentaerythritester langsam bis auf etwa Raumtemperatur abkühlt, die erstarrte Masse gegebenenfalls mechanisch zerkleinert, und mit einem Lösungsmittel, in dem Pentaerythritester löslich ist, extrahiert und das Lösungsmittel ggf. anschliessend weitgehend entfernt.

2. Verfahren nach Anspruch 1, dadurch gekennzeichnet, dass man Lösungen von Polypropylen in Pentaerythritestern von Fettsäuren verwendet.

3. Verfahren nach Anspruch 2, dadurch gekennzeichnet, dass man Pentaerythritester von synthetischen Fettsäuren mit 8 bis 10 Kohlenstoffatomen verwendet.

4. Verfahren nach den Ansprüchen 1 bis 3, dadurch gekennzeichnet, dass man zum Extrahieren Äthanol verwendet.

5. Verfahren nach den Asnprüchen 1 bis 4, dadurch gekennzeichnet, dass man Lösungen mit einem Gewichtsverhältnis Polypropylen zu Pentaerythritester von 30:70 bis 10:90 verwendet.

6. Verfahren nach Anspruch 5, dadurch gekennzeichnet, dass man Lösungen mit einem Gewichtsverhältnis Polypropylen zu Pentaerythritester von 25:75 bis 15:85 verwendet.

7. Verfahren nach den Ansprüchen 1 bis 6, dadurch gekennzeichnet, dass man die Lösungen im Bereich von etwa 260 bis 120°C im Schnitt mit einer Geschwindigkeit von 1 bis 20°C pro Minute abkühlt.

8. Verfahren nach Anspruch 7, dadurch gekennzeichnet, dass man mit einer Geschwindigkeit von 2 bis 10°C pro Minute abkühlt.

9. Verfahren nach den Ansprüchen 1 bis 8, dadurch gekennzeichnet, dass man Polypropylen verwendet, dem bis zu 10 Gew.-% Polyäthylen beigemischt ist.

10. Poröses pulverförmiges Polypropylen erhalten nach einem Verfahren gemäss den Ansprüchen 1 bis 9.

11. Poröses pulverförmiges Polypropylen gekennzeichnet durch eine scheinbare Dichte von 0,1 bis 0,3 g/cm³, eine Korngrösse von 50–700 µm und ein von aussen zugängliches Hohlraumvolumen von 70–85%.

12. Poröses pulverförmiges Polypropylen nach Anspruch 11, gekennzeichnet durch eine scheinbare Dichte von 0,3–0,15.

13. Poröses pulverförmiges Polypropylen nach Anspruch 11–12, gekennzeichnet durch eine Korngrösse von 50 bis 150 µm.

14. Verwendung von porösem, pulverförmigem Polypropylen nach den Ansprüchen 10 bis 13 zum Abtrennen von hydrophoben Substanzen aus wässrigen Systemen.

15. Verwendung von porösem, pulverförmigem Polypropylen nach Anspruch 14 zum Abtrennen von Öl.

16. Verwendung von porösem, pulverförmigem Polypropylen nach den Ansprüchen 10 bis 13 zum Aufsaugen von Flüssigkeiten.

17. Verwendung von porösem, pulverförmigem Polypropylen nach Anspruch 16 als Ölbindemittel.

18. Verwendung von porösem, pulverförmigem Polypropylen nach den Ansprüchen 10 bis 13 als Zusatz zu Anstrichmitteln.

19. Verwendung von porösem, pulverförmigem Polypropylen nach Anspruch 18 als Zusatz zu Schutzanstrichmitteln.

20. Verwendung von porösem, pulverförmigem Polypropylen nach den Ansprüchen 10 bis 13 als Träger von Substanzen zur Langzeitabgabe.

21. Verwendung von porösem, pulverförmigem Polypropylen nach Anspruch 20 als Träger von Duftstoffen.

22. Verwendung von porösem, pulverförmigem Polypropylen nach Anspruch 21 als Träger von Sexuallockstoffen für Insekten.

23. Verwendung von porösem, pulverförmigem Polypropylen nach den Ansprüchen 18 oder 19 als Träger von Substanzen zur Langzeitabgabe.

**Claims**

1. A process for the production of porous powder-form polypropylene, characterized in that hot solutions of polypropylene in pentaerythritol ester are slowly cooled to around room temperature, the solidified mass is optionally mechanically size-reduced and extracted with a solvent in which the pentaerythritol ester is soluble, after which most of the solvent is optionally removed.

2. A process as claimed in Claim 1, characterized in that solutions of polypropylene in pentaerythritol esters of fatty acids are used.

3. A process as claimed in Claim 2, characterized in that pentaerythritol esters of synthetic fatty acids containing from 8 to 10 carbon atoms are used.

4. A process as claimed in Claims 1 to 3, characterized in that ethanol is used for extraction.

5. A process as claimed in Claims 1 to 4, characterized in that solutions in which the ratio by weight of polypropylene to pentaerythritol ester is form 30:70 to 10:90 are used.

6. A process as claimed in Claim 5, characterized in that solutions in which the ratio by weight of polypropylene to pentaerythritol ester is from 25:75 to 15:85 are used.

7. A process as claimed in Claims 1 to 6, characterized in that the solutions are cooled from

around 260–120°C at an average cooling rate of 1 to 20°C per minute.

8. A process as claimed in Claim 7, characterized in that the solutions are cooled at a rate of 2 to 10°C per minute.

9. A process as claimed in Claims 1 to 8, characterized in that polypropylene to which up to 10% by weight of polyethylene has been added is used.

10. A porous powder-form polypropylene obtained by the process claimed in Claims 1 to 9.

11. A porous powder-form polypropylene, characterized by an apparent density of from 0.1 to 0.3 g/cc, a particle size of from 50 to 700 μm and a void volume accessible from outside of from 70 to 85%.

12. A porous powder-form polypropylene as claimed in Claim 11, characterized by an apparent density of from 0.3 to 0.15.

13. A porous powder-form polypropylene as claimed in Claims 11 and 12, characterized by a particle size of from 50 to 150 μm.

14. The use of the porous powder-form polypropylene as claimed in Claims 10 to 13 for separating hydrophobic substances from aqueous systems.

15. The use of the porous powder-form polypropylene as claimed in Claim 14 for separating oil.

16. The use of the porous powder-form polypropylene claimed in Claims 10 to 13 for absorbing liquids.

17. The use of the porous powder-form polypropylene as claimed in Claim 16 as an oil binder.

18. The use of the porous powder-form polypropylene claimed in Claims 10 to 13 as an additive for coating compositions.

19. The use of the porous powder-form polypropylene as claimed in Claim 18 as an additive for protective coating compositions.

20. The use of the porous powder-form polypropylene claimed in Claims 10 to 13 as a carrier for sustained-release substances.

21. The use of the porous powder-form polypropylene as claimed in Claim 20 as a carrier for fragrances.

22. The use of the porous powder-form polypropylene as claimed in Claim 21 as carriers for sexual luring agents for insects.

23. The use of the porous powder-form polypropylene as claimed in Claim 18 or 19 as carriers for sustained-release substances.

**Revendications**

1. Procédé pour la préparation de polypropylène poreux en poudre, caractérisé par le fait qu'on refroidit lentement jusqu'à presque la température ambiante des solutions chaudes de polypropylène dans le penta-érythrite-ester, qu'on broie éventuellement la masse solidifiée par des moyens mécaniques, et qu'on extrait avec un solvant dans lequel le penta-érythrite-ester est soluble puis qu'on élimine le solvant éventuellement en continu.

2. Procédé selon la revendication 1, caractérisé par le fait qu'on utilise des solutions de polypropylène dans des penta-érythrite-esters d'acide gras.

3. Procédé selon la revendication 2, caractérisé par le fait qu'on utilise des penta-érythrite-esters d'acide gras synthétiques ayant 8 à 10 atomes de carbone.

4. Procédé selon les revendications 1 à 3, caractérisé par le fait qu'on utilise l'éthanol pour l'extraction.

5. Procédé selon les revendications 1 à 4, caractérisé par le fait qu'on utilise des solutions ayant un rapport pondéral du polypropylène au penta-érythrite-ester de 30:70 à 10:90.

6. Procédé selon la revendication 5, caractérisé par le fait qu'on utilise des solutions ayant un rapport pondéral du polypropylène au penta-érythrite-ester de 25:75 à 15:85.

7. Procédé selon les revendications 1 à 5, caractérisé par le fait qu'on refroidit les solutions se trouvant à environ 260–120°C en moyenne avec une vitesse de 1 à 20°C par minute.

8. Procédé selon la revendication 7, caractérisé par le fait qu'on refroidit à une vitesse de 2 à 10°C par minute.

9. Procédé selon les revendications 1 à 8, caractérisé par le fait qu'on utilise le polypropylène qui est mélangé avec jusqu'à 10% en poids de polyéthylène.

10. Polypropylène poreux en poudre obtenu par un procédé selon les revendications 1 à 9.

11. Polypropylène poreux en poudre caractérisé par une densité apparente de 0,1 à 0,3 g/cm³, une taille de grain de 50 à 700 μm et une porosité accessible de l'extérieur de 70 à 85%.

12. Polypropylène poreux en poudre selon la revendication 11, caractérisé par une densité apparente de 0,3 à 0,15.

13. Polypropylène poreux en poudre selon les revendications 11 et 12, caractérisé par une taille de grain de 50 à 150 μm.

14. Utilisation du polypropylène poreux en poudre selon les revendications 10 à 13, pour séparer les substances hydrophobes de systèmes aqueux.

15. Utilisation du polypropylène poreux en poudre selon la revendication 14, pour séparer de l'huile.

16. Utilisation du polypropylène poreux en poudre selon les revendications 10 à 13, pour absorber des liquides.

17. Utilisation du polypropylène poreux en poudre selon la revendication 16, comme agent fixateur d'huile.

18. Utilisation du polypropylène poreux en poudre selon les revendications 10 à 13, comme additif aux peintures.

19. Utilisation du polypropylène poreux en poudre selon la revendication 18, comme additif aux peintures protectrices.

20. Utilisation du polypropylène poreux en poudre selon les revendications 10 à 13, comme support de substances en vue de leur diffusion de longue durée.

21. Utilisation du polypropylène poreux en poudre selon la revendication 20, comme support de parfums.

22. Utilisation du polypropylène poreux en poudre selon la revendication 21, comme support d'appâts sexuels pour les insectes.

23. Utilisation du polypropylène poreux en poudre selon les revendications 18 ou 19, comme support de substances en vue de leur diffusion de longue durée.